# EUROPÄISCHE PATENTANMELDUNG

(11) **EP 0 828 401 A2**
(43) Veröffentlichungstag der Anmeldung: **11.03.1998**
(21) Anmeldenummer: 97401906.9
(22) Anmeldetag: 07.08.1997
(51) Int. Cl.: H04Q 11/00

(54) **Schaltungsanordnung zur digitalen Nachrichtenübertragung**

(30) Priorität: 05.09.1996 DE 19635945
(71) Anmelder: ALCATEL ALSTHOM COMPAGNIE GENERALE D'ELECTRICITE, 75008 Paris (FR)
(72) Erfinder: Timmermann, Andreas, Dipl.-Ing., 30952 Ronnenberg (DE)
(74) Vertreter: Döring, Roger, Dipl.-Ing.

(57) **Zusammenfassung**

Es wird eine Schaltungsanordnung zur digitalen Nachrichtenübertragung über Lichtwellenleiter angegeben, bei welcher in einer Vermittlungsstelle (VST) ein erster, einen Crossconnector (CC I) aufweisender optischer Leitungsabschluß (OLT I) angeordnet ist. An den optischen Leitungsabschluß (OLT I) ist mindestens ein optisches Anschlußleitungsnetz (ON) angeschlossen, mit dem mindestens ein Teilnehmer (Tln) verbunden ist. Zur einfachen Vermittlung auch von Breitbanddiensten ist zwischen dem ersten optischen Leitungsabschluß (OLT I) und dem Anschlußleitungsnetz (ON) ein zweiter, einen Crossconnector (CC II) für höhere Übertragungsraten aufweisender optischer Leitungsabschluß (OLT II) eingeschaltet, der über entsprechende Schnittstellen einerseits zur Übertragung von Schmalbanddiensten mit dem ersten optischen Leitungsabschluß (OLT I) und andererseits zur Übertragung von Breitbanddiensten direkt mit einer Breitband-Vermittlungseinrichtung (BV) verbunden ist.

## Beschreibung

Die Erfindung bezieht sich auf eine Schaltungsanordnung zur digitalen Nachrichtenübertragung über Lichtwellenleiter, bei welcher in einer Vermittlungsstelle ein erster, einen Crossconnector aufweisender optischer Leitungsabschluß angeordnet ist und bei welcher an den optischen Leitungsabschluß mindestens ein optisches Anschlußleitungsnetz angeschlossen ist, mit dem mindestens ein Teilnehmer verbunden ist (Tagungsband der 36. Post- und Fernmeldetechnischen Fachtagung, 8. bis 9. März 1995, Hannover, Seiten 4.1 bis 4.20).

Die digitale Übertragungstechnik ermöglicht das Angebot unterschiedlichster Dienste, die von den Teilnehmern eines Fernmeldenetzes genutzt werden können. Diese Dienste umfassen u. a. Telefon, Telefax, IDN und ISDN (Basis- und Primärmultiplexanschlüsse). Von besonderer Bedeutung ist dabei der Teilnehmeranschlußbereich des Fernmeldenetzes, also das Anschlußleitungsnetz. Ein derartiges Anschlußleitungsnetz wird auch als "Fiber-in-the-Loop" (FITL)-System bezeichnet. Es ist an einen optischen Leitungsabschluß (OLT) angeschlossen, der üblicherweise direkt in einer digitalen Vermittlungsstelle aufgebaut ist. Der OLT verfügt über Schnittstellen zur Leitungstechnik.

Heutige FITL-Systeme haben einen OLT, der für die Kanalzuordnung für Schmalbanddienste - wie analoges Telefon oder ISDN - eine Crossconnect-Funktion auf der Basis von 64 kbit/s hat. Ein solches System ist beispielsweise das aus dem oben erwähnten Tagungsband bekannte HYTAS. In der Zukunft wird ein zunehmender Bedarf an Breitbanddiensten entstehen, wenn allen Teilnehmern eines Fernmeldenetzes beispielsweise eine Übertragungsrate von 2 Mbit/s zur Verfügung gestellt werden soll. Solche Breitbanddienste sind beispielsweise Bildtelefon und Video on Demand. Probleme bei der Deckung eines entsprechenden Bedarfs liegen bei FITL-Systemen weniger im Bereich der Übertragungstechnik, da mit der Glasfaser ein ausreichend breitbandiges Medium zur Verfügung steht. Zur Erhöhung der Übertragungskapazität brauchen hier gegebenenfalls nur Baugruppen ausgetauscht zu werden. Schwierigkeiten können sich aber im Bereich des OLT ergeben, wo das Überschreiten der durch den Crossconnector begrenzten Übertragungskapazität, die derzeit üblicherweise auf 64 kbit/s (analoger Anschluß) bzw. 2 x 64 kbits/s (ISDN Basisanschluß) je Teilnehmer dimensioniert ist.

Der Erfindung liegt die Aufgabe zugrunde, die eingangs beschriebene Schaltungsanordnung so weiterzubilden, daß unter Beibehaltung des bisherigen Netzaufbaus und der bisherigen Netzstruktur einschließlich erstem OLT möglichst allen Teilnehmern eines Fernmeldenetzes zusätzlich zu dem Schmalbanddiensten ein Übertragungskanal für Breitbanddienste zur Verfügung gestellt werden kann.

Diese Aufgabe wird gemäß der Erfindung dadurch gelöst, daß zwischen dem ersten OLT und dem Anschlußleitungsnetz ein zweiter, einen Crossconnector für höhere Übertragungsraten aufweisender OLT eingeschaltet ist, der über entsprechende Schnittstellen einerseits zur Übertragung von Schmalbanddiensten mit dem ersten OLT und andererseits zur Übertragung von Breitbanddiensten direkt mit einer Breitband-Vermittlungseinrichtung verbunden ist.

Bei Einsatz dieser Schaltungsanordnung bleibt der bisherige Aufbau des Anschlußleitungsnetzes i.w. erhalten. Trotz der jetzt möglichen gleichzeitigen Übertragung von Breitbanddiensten an alle Teilnehmer wird der erste OLT nicht zusätzlich belastet, da die Breitbanddienste an ihm vorbeigeleitet werden. Dabei dient der zweite OLT als Abschluß des optischen Anschlußleitungsnetzes, das sowohl Schmalbanddienste als auch Breitbanddienste transportiert. Er hat eine Crossconnectfunktion mit einer Granularität von beispielsweise 2 Mbit/s zur Aufteilung bzw. zum Zusammenfassen der Datenströme in Schmalbanddienste und Breitbanddienste. Die Aufteilung der Crossconnectfunktion auf zwei Stufen, nämlich den ersten Crossconnector mit einer unveränderten Granularität von 64 kbit/s und einen zweiten Crossconnector mit einer Granularität von beispielsweise 2 Mbit/s bringt außerdem eine Minimierung der Komplexität der gesamten Crossconnectfunktion. Es muß nur ein geringer Teil des Datenstroms mit hoher Granularität (64 kbit/s) durchgeschaltet werden.

Der zweite OLT hat eine optische oder elektrische Schnittstelle zum bestehenden, ersten OLT mit beispielsweise 140 Mbit/s für den ausschließlichen Transport der Schmalbanddienste. Sie werden im zweiten OLT in der einen Übertragungsrichtung aus den Datenströmen aussortiert und in der anderen Übertragungsrichtung zu Datenströmen zusammengefaßt. Der zweite OLT hat außerdem optische oder elektrische Schnittstellen mit z. B. 155 Mbit/s oder 625 Mbit/s für den direkten Transport der Breitbanddienste zur Breitband-Vermittlungseinrichtung bzw. für von derselben übertragene Breitbanddienste. Der erste OLT bleibt von den Breitbanddiensten unberührt. Alle zu übertragenden Daten können zwischen dem zweiten OLT und den Teilnehmern unverändert beispielsweise in 140 Mbit/s-Datenströmen derart zusammengefaßt werden, daß Schmalbanddienste in ersten 2 Mbit/s-Zeitschlitzen und Breitbanddienste in anderen 2 Mbit/s-Zeitschlitzen übertragen werden.

Die im Vorangehenden und in den folgenden Erläuterungen angegebenen Zahlenwerte sind nur Beispiele. Sie sind für die Erfindung nicht von Bedeutung. Wesentlich ist, daß der Crossconnector des ersten OLT weiter nur Kanäle mit niedrigen Übertragungsraten für Schmalbanddienste durchschaltet. Sie werden zwischen erstem und zweitem OLT in einem höherratigen Datenstrom übertragen. Der Crossconnector des zweiten OLT schaltet hingegen höherratige Kanäle durch, in den sowohl Schmalbanddienste als auch Breitbanddienste enthalten sind. Die Kanäle für Breitbanddienste werden zu hochratigen Datenströmen zusammengefaßt zwischen dem zweiten OLT und der Breitband-Vermittlungseinrichtung übertragen.

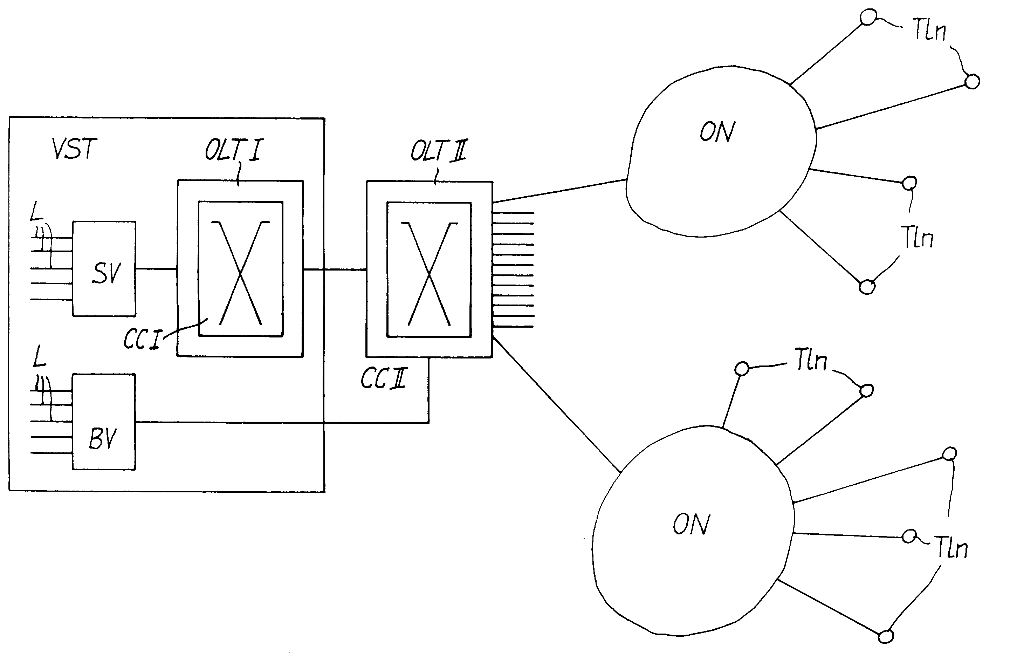

Ein Ausführungsbeispiel des Erfindungsgegenstandes ist in der Zeichnung dargestellt. Die einzige Figur dieser Zeichnung zeigt in schematischer Darstellung den Anschlußleitungsbereich eines Fernmeldenetzes.

In einer Vermittlungsstelle VST eines digitalen Fernmeldenetzes ist ein erster optischer Leitungsabschluß OLT I mit einem Crossconnector CC I angeordnet. An den OLT I ist eine Schmalband-Vermittlungseinrichtung SV angeschlossen. In der VST befindet sich außerdem eine Breitband-Vermittlungseinrichtung BV. Die nur angedeuteten weiterführenden Leitungen L entsprechen Schnittstellen zur Leitungstechnik.

Die BV ist ebenso wie der OLT I mit einem zweiten optischen Leitungsabschluß OLT II verbunden, der ebenfalls einen Crossconnector CC II enthält. An den OLT II ist mindestens ein optisches Anschlußleitungsnetz ON angeschlossen, mit dem mindestens ein Teilnehmer Tln verbunden ist. Im dargestellten Ausführungsbeispiel sind 14 ONs an den OLT II angeschlossen, von denen nur zwei etwas genauer dargestellt sind. Es sollen beispielsweise 1664 Tln mit Schmalbanddiensten und Breitbanddiensten versorgt werden können.

Die Schaltungsanordnung nach der Erfindung arbeitet beispielsweise wie folgt:

Schmalbanddienste mit einer Übertragungsrate von 64 kbit/s werden von der SV kommend im OLT I zu einem Datenstrom von 140 Mbit/s zusammengefaßt. Dieser Datenstrom wird dem OLT II zugeführt. Über andere Schnittstellen werden dem OLT II von der BV Breitbanddienste mit einer Übertragungsrate 155 Mbit/s aufgegeben. Sowohl die Schmalbanddienste als auch die Breitbanddienste werden im CC II des OLT II crossconnectet und zu Zeitschlitzen zusammengefaßt über das entsprechende ON zum betroffenen Tln übertragen. Dabei werden im OLT II sowohl die Schmalbanddienste als auch die Breitbanddienste in 2Mbit/s-Zeitschlitzen zusammengefaßt, allerdings in unterschiedlichen.

In der Gegenrichtung werden im OLT II in dessen hochratigem CC II aus allen angeschlossenen ONs diejenigen 2 Mbit/s-Zeitschlitze aussortiert, die Schmalbanddienste transportieren, zu einem 140 Mbit/s-Datenstrom zusammengefaßt und zum OLT I übertragen, der nach wie vor die 64 kbit/s-Kanäle zur SV durchschaltet. Diejenigen 2 Mbit/s-Zeitschlitze, die Breitbanddienste transportieren, werden ebenfalls im OLT II aussortiert, zu beispielsweise 155 Mbit/s- oder 625 Mbit/s-Datenströmen zusammengefaßt und zu der BV übertragen.

Die Crossconnectoren beider OLTs und damit die Zuordnung der einzelnen Kanäle können wie bisher durch das Managementsystem des ganzen Fernmeldenetzes gesteuert werden.

## Patentansprüche

1. Schaltungsanordnung zur digitalen Nachrichtenübertragung über Lichtwellenleiter, bei welcher in einer Vermittlungsstelle ein erster, einen Crossconnector aufweisender optischer Leitungsabschluß angeordnet ist und bei welcher an den optischen Leitungsabschluß mindestens ein optisches Anschlußleitungsnetz angeschlossen ist, mit dem mindestens ein Teilnehmer verbunden ist, dadurch gekennzeichnet, daß zwischen dem ersten optischen Leitungsabschluß (OLT I) und dem Anschlußleitungsnetz (ON) ein zweiter, einen Crossconnector (CC II) für höhere Übertragungsraten aufweisender optischer Leitungsabschluß (OLT II) eingeschaltet ist, der über entsprechende Schnittstellen einerseits zur Übertragung von Schmalbanddiensten mit dem ersten optischen Leitungsabschluß (OLT I) und andererseits zur Übertragung von Breitbanddiensten direkt mit einer Breitband-Vermittlungseinrichtung (BV) verbunden ist.

2. Schaltungsanordnung nach Anspruch 1, dadurch gekennzeichnet, daß im zweiten optischen Leitungsabschluß (OLT II) alle zu Teilnehmern (Tln) zu übertragenden Daten zu Datenströmen zusammengefaßt und für Schmalbanddienste einerseits sowie Breitbanddienste andererseits in getrennten Zeitschlitzen übertragen werden.

3. Schaltungsanordnung nach Anspruch 1, dadurch gekennzeichnet, daß im zweiten optischen Leitungsabschluß (OLT II) aus den von Teilnehmern (Tln) kommenden Zeitschlitzen einerseits die Zeitschlitze, welche Schmalbanddienste transportieren, und andererseits die Zeitschlitze, welche Breitbanddienste transportieren, aussortiert und zu Datenströmen zusammengefaßt werden, die der jeweiligen Schnittstelle zum ersten optischen Leitungsabschluß (OLT I) bzw. zur Breitband-Vermittlungseinrichtung (BV) zugeführt werden.

4. Schaltungsanordnung nach einem der Ansprüche 1 bis 3, dadurch gekennzeichnet, daß die Schnittstellen des zweiten optischen Leitungsabschlusses (OLT II) optische Schnittstellen sind.

5. Schaltungsanordnung nach einem der Ansprüche 1 bis 3, dadurch gekennzeichnet, daß die Schnittstellen des zweiten optischen Leitungsabschlusses (OLT II) elektrische Schnittstellen sind.
